# EUROPÄISCHE PATENTANMELDUNG

(11) **EP 1 455 132 A1**
(43) Veröffentlichungstag der Anmeldung: **08.09.2004**
(21) Anmeldenummer: 04405122.5
(22) Anmeldetag: 02.03.2004
(51) Int. Cl.: F16M 1/00

(54) **Grundgestell**

(30) Priorität: 05.03.2003 CH 3402003
(71) Anmelder: SIG Technology Ltd., 8212 Neuhausen am Rheinfall (CH)
(72) Erfinder: Preuss, Michael, 78247 Hilzingen (DE); Torgler, Yves, 8200 Schaffhausen (CH)
(74) Vertreter: Clerc, Natalia

(57) **Zusammenfassung**

Ein Grundgestell für eine Vorrichtung, insbesondere für eine Verpackungsmaschine, weist mindestens einen ersten Träger (2) auf, welcher aus einer ersten und einer zweiten Profilschiene (20, 21) gebildet ist. Die zwei Profilschienen (20, 21) sind parallel zueinander angeordnet und mittels eines Verbindungsmittels (4) in ihrer Lage zueinander fixiert. Diese Profilschienen (20, 21) sind Winkelprofile mit je einem ersten und einem zweiten Schenkel, wobei die Schenkel der ersten Profilschiene (20) mit ihren freien Enden gegen freie Enden der Schenkel der zweiten Profilschiene (21) gerichtet sind und wobei die Schenkel mit ihren Oberflächen schräg zu einer horizontalen Raumebene ausgerichtet sind.

## Beschreibung

### Technisches Gebiet

Die Erfindung betrifft ein Grundgestell für eine Vorrichtung, insbesondere für eine Verpackungsmaschine, gemäss Oberbegriff des Patentanspruchs 1.

### Stand der Technik

DE 201 03 180 U offenbart eine Verpackungsmaschine, welche mittels Zwischenelementen auf einem Grundgestell befestigt ist. Diese Zwischenelemente bestehen aus jeweils paarweise, parallel nebeneinander angeordneten Flacheisen, welche zwischen Klemmplatten angeordnet sind. Die Klemmplatten weisen Nuten auf, um die Flacheisen in einem definierten Abstand voneinander zu halten. Zur Fixierung der Flacheisen werden die Klemmplatten mittels Spannschrauben gegeneinander verspannt. Diese Vorrichtung soll eine einfache und flexible Montage von Elementen der Verpackungsmaschine erlauben. Insbesondere soll sie ermöglichen, dass die Elemente oder Module sowohl in Längs- wie auch in Querrichtung einer Verpackungs- oder Förderbahn verschoben und an beliebigen Stellen befestigt werden können.

Diese Vorrichtung weist jedoch den Nachteil auf, dass sie relativ viele Einzelelemente umfasst. Da zusätzlich zum Grundgestell noch Zwischenelemente benötigt werden, ist zudem die Reinigung erschwert.

### Darstellung der Erfindung

Es ist deshalb Aufgabe der Erfindung, ein Grundgestell für eine Vorrichtung, insbesondere für eine Verpackungsmaschine zu schaffen, welche eine grosse Flexibilität in der Anordnung von Modulen oder Elementen der Vorrichtung ermöglicht und trotzdem möglichst wenig verschmutzt wird.

Diese Aufgabe löst ein Grundgestell mit den Merkmalen des Patentanspruchs 1.

Das erfindungsgemässe Grundgestell weist mindestens einen ersten Träger auf, welcher aus einer ersten und einer zweiten winkelförmigen Profilschiene gebildet ist, wobei die Schenkel der ersten Profilschiene mit ihren freien Enden gegen die freien Enden der Schenkel der zweiten Profilschiene gerichtet sind. Dabei sind die Schenkel mit ihren Oberflächen schräg zu einer horizontalen Raumebene ausgerichtet.

Auf den schrägen Oberflächen des ersten Trägers kann kaum Schmutz anhaften, so dass die natürliche Verschmutzung durch herunterfallenden Staub oder andere Partikel minimiert ist. Zudem tropfen auch Flüssigkeiten ab. Dies ist insbesondere bei Verwendung des Grundgestells in der Lebensmittelfertigung und -verpackung vorteilhaft.

In einer bevorzugten Ausführungsform ist mindestens ein zweiter Träger vorhanden, welcher aus einem Winkelprofil gebildet ist und quer zur Längsrichtung des ersten Trägers, mit den Schenkeln zu diesem hingerichtet, auf diesem aufliegt. Vorzugsweise sind alle freiliegenden Flächen, insbesondere auch die Beine des Grundgestells schräg angeordnet.

In einem bevorzugten Ausführungsbeispiel sind die Profilschienen beabstandet zueinander angeordnet, so dass ein Zwischenraum entsteht, durch welchen Schmutz ebenfalls durchfallen kann. Zudem erleichtert eine nach oben und unten offene Gestaltung des Trägers die Reinigung.

Die erfindungsgemässe Anordnung der Profilschienen, bei welcher die Schenkel Kante auf Kante zueinander liegen, ermöglicht zudem die Verwendung von einfach befestigbaren und entlang der Längsachse der Profilschienen verschiebbaren Verbindungsmitteln.

Vorteilhaft ist ferner, dass sich auf dem zweiten Träger Befestigungsmittel zur Befestigung von Elementen oder Modulen der Vorrichtung, insbesondere der Verpackungsmaschine, anordnen lassen, welche beliebig verschiebbar und in ihrer jeweiligen Lage auf einfache Art und Weise fixierbar sind.

Das erfindungsgemässe Grundgestell ist einfach und kostengünstig herstellbar, insbesondere da sich hierzu Normwinkelprofile verwenden lassen und eine geringe Anzahl unterschiedlicher Elemente sowie grundsätzlich eine geringe Gesamtzahl von Einzelteilen zur Bildung des Gestells notwendig sind. Vorteilhaft ist zudem, dass sich für die ersten und zweiten Träger dieselben Normprofile verwenden lassen.

Das erfindungsgemässe Grundgestell ist trotz seines hohen Flexibilitätsgrads stabil und robust und eignet sich somit insbesondere zur Befestigung von Transportbändern von Verpackungsmaschinen.

Weitere vorteilhafte Ausführungsformen gehen aus den abhängigen Patentansprüchen hervor.

### Kurze Beschreibung der Zeichnung

Im folgenden wird der Erfindungsgegenstand anhand eines bevorzugten Ausführungsbeispiels, welches in der beiliegenden Zeichnung dargestellt ist, erläutert. Es zeigen:
- Figur 1: eine perspektivische Darstellung des erfindungsgemässen Grundgestells;
- Figur 2: eine Seitenansicht des Grundgestells mit darauf befestigtem Transportband;
- Figur 3: eine Ansicht eines Teils des Grundgestells gemäss Figur 1 mit einem ersten und zweiten Träger;
- Figur 4: einen Querschnitt durch einen Teil des Grundgestells gemäss Figur 1;
- Figur 5: eine Ansicht eines zweiten Trägers mit einem Befestigungsmittel gemäss Figur 1 und
- Figur 6: eine perspektivische Darstellung eines Trägers.

### Wege zur Ausführung der Erfindung

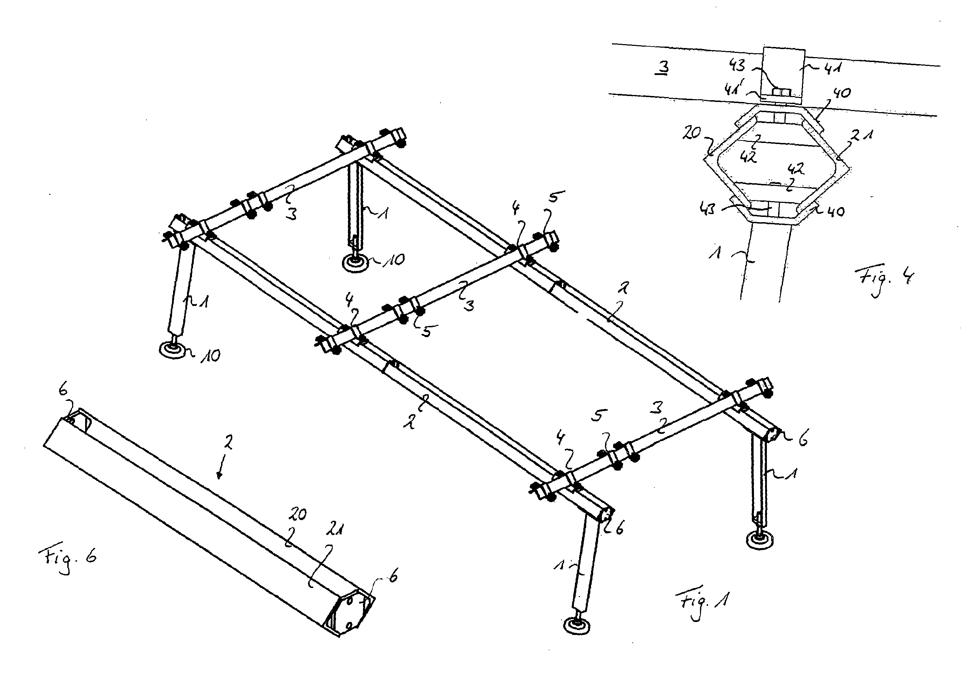

In Figur 1 ist ein erfindungsgemässes Grundgestell dargestellt. Es besteht im wesentlichen aus mindestens einem Bein 1, mindestens einem ersten Träger 2 und mindestens einem zweiten Träger 3. Das Gestell ist im wesentlichen aus Aluminium, Stahl oder einem anderen geeigneten Material gefertigt.

Die Beine 1 sind vorzugsweise durch Profilschienen mit einem offenen Profil gebildet. Sie verfügen über höhenverstellbare Füsse 10. Die Beine 1 können zur Stabilitätserhöhung auch untereinander verstrebt werden.

Auf den Beinen 1 sind die ersten Träger 2 angeordnet. Diese ersten Träger 2 bilden hier die Längsträger des Gestells. Es sind jedoch auch Ausführungsformen möglich, bei welchen sie die Querträger bilden. Die zweiten Träger 3, welche hier die Querträger bilden, verlaufen quer zu den ersten Trägern 2 und liegen auf diesen auf. Diese zweiten Träger 3 sind mittels Verbindungsmitteln 4 auf den ersten Trägern 3 befestigt. Zudem sind Befestigungsmittel 5 beliebig verschiebbar und in ihrer Lage fixierbar auf den zweiten Trägern 3 befestigt. Diese Mittel 5 dienen zur Befestigung von Modulen oder Elementen einer Vorrichtung, insbesondere einer Verpackungsmaschine.

Wie in Figur 2 dargestellt ist, lässt sich auf diesem Grundgestell beispielsweise ein Transportband B einer Verpackungsanlage befestigen. In diesem Beispiel sind hierfür Spindeln S vorhanden, welche an den Befestigungsmitteln 5 fixiert sind. Mittels dieser Spindeln S ist das Transportband B höhenverstellbar. Andere Verwendungsarten des Grundgestells sind jedoch möglich.

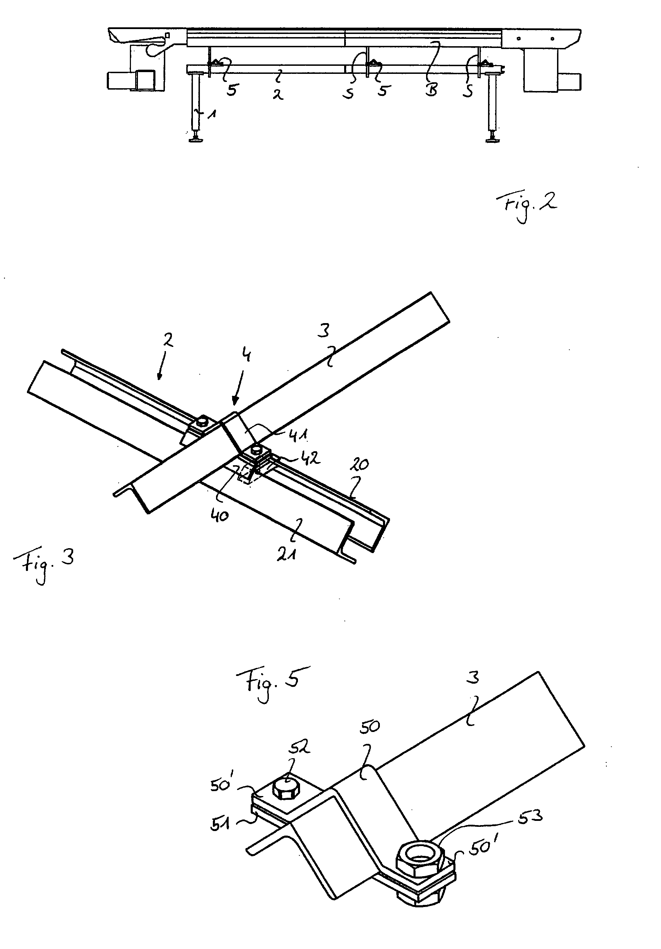

In Figur 3 ist der grundsätzliche erfindungsgemässe Aufbau der Träger 2, 3 erkennbar. Der erste Träger 2 besteht aus einer ersten und einer zweiten winkelförmigen, vorzugsweise identischen Profilschiene 20, 21. Diese zwei Profilschienen 20, 21 weisen erste und zweite Schenkel auf, welche vorzugsweise gleich lang sind. Die Schenkel jeder Schiene 20, 21 bilden zudem vorzugsweise mindestens annähernd einen rechten Winkel. Die zwei Profilschienen 20,21 sind so spiegelsymmetrisch zueinander angeordnet, dass die freien Enden der Schenkel der ersten Schiene 20 zu den freien Enden der Schenkel der zweiten Schiene 21 gerichtet sind und die freien Enden beziehungsweise Kanten der Schenkel 20, 21 im montierten Zustand oben und unten liegen. Die Schienen verlaufen parallel, vorzugsweise beabstandet voneinander. Ihre Enden sind, wie in Figur 6 dargestellt ist, mit einer Stirnplatte 6 mindestens teilweise verschlossen. Die Stirnplatte 6 ist üblicherweise angeschraubt oder angeschweisst. Die Stirnplatten 6 erhöhen die Steifigkeit der ersten Träger 2.

Die zwei Profilschienen 20, 21 sind mittels des Verbindungsmittels 4 in ihrer Lage zueinander fixiert gehalten. Das verbindungsmittel 4 weist, wie in Figur 4 gut erkennbar ist, ein Verbindungsprofil 40, einen Nutenstein 42 und ein erstes Spannmittel 43 auf. Das Verbindungsprofil 40 ist ein zweifach gebogenes Blech, welches einen Steg und zwei Schenkel aufweist. Das Verbindungsprofil kann auch als Fräs- oder Gussteil ausgebildet sein. Dieses Verbindungsprofil 40 beziehungsweise sein Steg verbindet zwei einander gegenüberliegende Schenkel der ersten und zweiten Profilschiene 20, 21 miteinander und liegt mit seinen eigenen Schenkeln auf der Aussenseite dieser Schenkel auf. Der Nutenstein 42 bildet das Gegenstück. Sein Querschnitt ist der durch die zwei Schenkel der Profilschienen 20, 21 gebildeten Innenfläche angepasst. Hier ist er trapezförmig. Der Nutenstein 42 lässt sich somit zur Anlage an die inneren Flächen der Schenkel bringen. Das Spannmittel 43, hier eine Spannschraube, verspannt den Nutenstein 42 und das Verbindungsprofil 40 gegeneinander und fixiert so die Profilschienen 20, 21. Vorzugsweise sind sowohl die oberen wie auch die unteren Kanten der Profilschienen 20, 21 mittels je mindestens eines derartigen Verbindungsmittels 4 verbunden. Diese Anordnung weist den Vorteil auf, dass Schmutzpartikel auch zwischen den zwei Profilschienen 20, 21 durchfallen können.

Wie in Figur 4 dargestellt ist, sind die Beine 1 am Verbindungsmittel 4, vorzugsweise am Verbindungsprofil 40 angeordnet. Vorzugsweise sind sie angeschweisst, wobei sie schräg zum Steg angeordnet sind.

Wie ebenfalls in den Figuren 3 und 4 erkennbar ist, ist der zweite Träger 3 auf dem Verbindungsprofil 40 befestigt. Der zweite Träger 3 ist aus einem Winkelprofil gebildet, welches vorzugsweise identisch ausgebildet ist wie die Winkelprofile des ersten Trägers 2. Der zweite Träger 3 ist dabei so auf dem ersten Träger 2 angeordnet, dass seine Schenkel mit ihren freien Enden zum ersten Träger 2 hingerichtet sind und die Schenkel mittel- oder unmittelbar auf den ersten Schenkeln der Profilschienen des ersten Trägers 2 aufliegen.

Zur Befestigung des zweiten Trägers 2 auf dem Verbindungsprofil 40 ist ein Befestigungsprofil 41 vorhanden. Dieses Befestigungsprofil 41 ist ebenfalls aus einem gebogenen Blech gefertigt, wobei es einen v-förmigen Querschnitt mit daran angrenzenden Befestigungsflanschen 41' aufweist. Das Profil 41 liegt mit diesen Flanschen 41' auf dem Verbindungsprofil 40 auf. Die Flansche 41' sind vom Spannmittel 43 durchsetzt, so dass dieses zugleich zur Fixierung der Profilschienen 20, 21 des ersten Trägers 2 auch den zweiten Träger 3 befestigt.

In Figur 5 ist das Befestigungsmittel 5 zur Befestigung von weiteren Elementen und Modulen dargestellt. Dieses weist ebenfalls ein Befestigungsprofil 50 auf, welches vorzugsweise identisch ausgebildet ist wie das Befestigungsprofil 41 des Verbindungsmittels 4 und ebenfalls auf den Schenkeln des zweiten Trägers 3 aufliegt. Auf der gegenüberliegenden Seite ist eine plane Gegenplatte 51 angeordnet und mittels zweiten Spannmitteln 52, hier Spannschrauben, gegen das Befestigungsprofil 50 verspannt. Auf mindestens einem der Flansche 50' des Befestigungsprofils 50 ist ein Befestigungselement 53 vorhanden. Dieses kann eine Schraubverbindung, eine Gewindebohrung oder ein anderes geeignetes Mittel sein.

Das oben beschriebene Grundgestell entspricht einem bevorzugten Ausführungsbeispiel, da praktisch alle frei liegenden Flächen schräg verlaufen. Es ist jedoch auch möglich, den zweiten Träger rohrförmig auszubilden oder als möglichst dünnen, rechteckförmigen Stab auszubilden. Zudem ist es möglich, die erfindungsgemässen ersten und zweiten Träger in Form von Zwischenelementen auf einem bekannten Grundgestell anzuordnen. Ferner ist es möglich, das Befestigungsprofil 41 des Verbindungsmittels 4 so auszubilden, dass es gleichzeitig als Verbindungsprofil 40 dient. Beispielsweise indem es seitlich angeordnete Schenkel aufweist, welche auf den Schenkeln der Profilschienen 20, 21 aufliegen. Die Verspannung erfolgt in diesem Fall ausschliesslich zwischen Befestigungsprofil 41 und Nutenstein 42. In diesem Fall kann der zweite Träger 3 unmittelbar auf dem ersten Träger 2 aufliegen.

Das erfindungsgemässe Grundgestell verschmutzt aufgrund der schrägen Flächen weniger, ist kostengünstig herstellbar und weist einen hohen Flexibilitätsgrad auf.

### Bezugszeichenliste

- B: Transportband
- S: Spindel

- 1: Bein
- 10: Fuss

- 2: Erster Träger
- 20: Erste Profilschiene
- 21: zweite Profilschiene

- 3: zweiter Träger

- 4: Verbindungsmittel
- 40: Verbindungsprofil
- 41: Befestigungsprofil
- 41': Flansch
- 42: Nutenstein
- 43: Erstes Spannmittel

- 5: Befestigungsmittel
- 50: Befestigungsprofil
- 50': Flansch
- 51: Gegenplatte
- 52: Zweites Spannmittel
- 53: Befestigungselement

- 6: Stirnplatte

## Patentansprüche

1. Grundgestell für eine Vorrichtung, insbesondere für eine Verpackungsmaschine, mit mindestens einem ersten Träger (2), welcher aus einer ersten und einer zweiten Profilschiene (20, 21) gebildet ist, wobei die zwei Profilschienen (20, 21) parallel zueinander angeordnet sind und mittels eines Verbindungsmittels (4) in ihrer Lage zueinander fixiert sind, **dadurch gekennzeichnet, dass** die Profilschienen (20, 21) Winkelprofile mit je einem ersten und einem zweiten Schenkel sind, wobei die Schenkel der ersten Profilschiene (20) mit ihren freien Enden gegen freie Enden der Schenkel der zweiten Profilschiene (21) gerichtet sind und wobei die Schenkel mit ihren Oberflächen schräg zu einer horizontalen Raumebene ausgerichtet sind.

2. Grundgestell nach Anspruch 1, **dadurch gekennzeichnet, dass** jede der Profilschienen (20, 21) zwei gleich lange Schenkel aufweist und dass die Profilschienen (20, 21) spiegelsymmetrisch zueinander angeordnet sind.

3. Grundgestell nach einem der Ansprüche 1 oder 2, **dadurch gekennzeichnet, dass** die Profilschienen (20, 21) beabstandet zueinander angeordnet sind.

4. Grundgestell nach einem der Ansprüche 1 bis 3, **dadurch gekennzeichnet, dass** mindestens ein zweiter Träger (3) vorhanden ist, welcher quer zur Längsrichtung des ersten Trägers (2) verlaufend auf dem ersten Träger (2) angeordnet ist, wobei der zweite Träger (3) aus einem Winkelprofil mit einem ersten und einem zweiten Schenkel gebildet ist, wobei diese Schenkel zum ersten Träger (2) hin gerichtet sind und mittel- oder unmittelbar auf den ersten Schenkeln der Profilschienen (20, 21) des ersten Trägers (2) aufliegen.

5. Grundgestell nach einem der Ansprüche 1 bis 4, **dadurch gekennzeichnet, dass** das Verbindungsmittel (4) aus einem Verbindungsprofil (40), einem Nutenstein (42) und mindestens einem Spannmittel (43) gebildet ist, wobei das Verbindungsprofil (40) zwei einander gegenüberliegende Schenkel der ersten und zweiten Profilschiene (20, 21) miteinander verbindet und auf einer Aussenseite dieser Schenkel anliegt, wobei der Nutenstein (42) auf einer Innenseite dieser Schenkel anliegt und wobei das Spannmittel (43) den Nutenstein (42) und das Verbindungsprofil (40) gegeneinander verspannt.

6. Grundgestell nach Anspruch 5, **dadurch gekennzeichnet, dass** das Verbindungsmittel (4) im montierten Zustand auf der oberen Seite des ersten Trägers (2) angeordnet ist und ein zweites Verbindungsmittel (4), welches ebenfalls ein Verbindungsprofil (40), einen Nutenstein (42) und mindestens ein Spannmittel (43) umfasst, auf der unteren Seite des ersten Trägers (2) angeordnet ist.

7. Grundgestell nach den Ansprüchen 4 und 5, **dadurch gekennzeichnet, dass** der zweite Träger (3) mittels eines v-förmigen, mit seitlichen Befestigungsflanschen (41') versehenen Befestigungsprofils (41) gegenüber dem Nutenstein (42) verspannbar ist.

8. Grundgestell nach Anspruch 4, **dadurch gekennzeichnet, dass** auf dem mindestens zweiten Träger (3) Befestigungsmittel (5) zur Befestigung von Elementen der Vorrichtung verschiebbar und in ihrer Lage fixierbar angeordnet sind.

9. Grundgestell nach einem der Ansprüche 1 bis 8, **dadurch gekennzeichnet, dass** der mindestens eine erste Träger (2) Enden aufweist, welche durch je eine Stirnplatte (6) mindestens teilweise verschlossen sind.

10. Grundgestell nach einem der Ansprüche 1 bis 9, **dadurch gekennzeichnet, dass** das Grundgestell mindestens ein Bein (1) aufweist, welches im montierten Zustand schräg zur Vertikalen der Raumebene verläuft und welches am Verbindungsmittel (4) befestigt, insbesondere angeschweisst ist.
